(19) Europäisches Patentamt / European Patent Office / Office européen des brevets

(11) **EP 3 607 275 B1**

(12) **EUROPÄISCHE PATENTSCHRIFT**

(45) Veröffentlichungstag und Bekanntmachung des Hinweises auf die Patenterteilung:
**19.05.2021 Patentblatt 2021/20**

(21) Anmeldenummer: **18716591.5**

(22) Anmeldetag: **05.04.2018**

(51) Int Cl.:
**G01D 5/14** *(2006.01)* **G01B 7/00** *(2006.01)*
**G06F 3/03** *(2006.01)* **G06F 3/0346** *(2013.01)*

(86) Internationale Anmeldenummer:
**PCT/EP2018/058787**

(87) Internationale Veröffentlichungsnummer:
**WO 2018/185248 (11.10.2018 Gazette 2018/41)**

(54) **MAGNETISCHE ANORDNUNG ZUR ERFASSUNG VON RELATIVBEWEGUNGEN ODER RELATIVPOSITIONEN**

MAGNETIC ARRANGEMENT FOR DETECTING RELATIVE MOVEMENTS OR RELATIVE POSITIONS

DISPOSITIF MAGNÉTIQUE DE DÉTECTION DE MOUVEMENTS RELATIFS OU DE POSITIONS RELATIVES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2017 DE 102017206025**

(43) Veröffentlichungstag der Anmeldung:
**12.02.2020 Patentblatt 2020/07**

(73) Patentinhaber: **Deutsches Zentrum für Luft- und Raumfahrt e.V.**
**51147 Köln (DE)**

(72) Erfinder:
• **SENFT, Volker**
**82229 Seefeld (DE)**
• **REILL, Josef**
**86916 Kaufering (DE)**
• **WEDLER, Armin**
**80636 München (DE)**
• **SEITZ, Nikolaus**
**82234 Oberpfaffenhofen (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**US-A1- 2012 306 603 US-A1- 2014 340 372**
**US-A1- 2016 378 191**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine magnetische Anordnung zur Erfassung von Relativbewegungen oder Relativpositionen von zwei Objekten, Gegenständen, Körpern, oder dergleichen. Ferner betrifft die Erfindung ein Eingabegerät, das die erfindungsgemäße magnetische Anordnung aufweist.

Relativbewegungen beschreiben Verschiebungen oder Winkeldrehungen der beiden Objekte relativ zueinander. Relativpositionen sind die daraus resultierenden Positionen, die die beiden Objekte relativ zueinander aufweisen. Zur Erfassung dieser Relativbewegungen und/ oder Relativpositionen zweier Objekte haben sich weitgehend optoelektronische Anordnungen durchgesetzt. Hierbei wird meist die Bewegung eines beweglichen Objekts gegenüber einem feststehenden Objekt erfasst. Verschiebungen werden in den Komponenten X, Y und Z beschrieben. Diese Komponenten entsprechen Verschiebungen in einem kartesischen XYZ-Koordinatensystem. Winkeldrehungen, der beiden Objekte relativ zueinander werden durch die Komponenten A, B und C beschrieben, die jeweils Verdrehungen um die Achsen X, Y und Z ausdrücken. Somit ergeben sich zwischen zwei Objekten, die frei zueinander bewegbar sind, also sechs Freiheitsgrade aufweisen, sechs verschiedene relative Bewegungen. Hierbei handelt es sich um drei unterschiedliche Verschiebungen (X-, Y-, Z-Verschiebung) und drei unterschiedlichen Winkeldrehungen (A-, B-, C-Winkeldrehung). Mit Hilfe dieser sechs Bewegungen kann jegliche Relativbewegung und/oder Relativposition zwischen zwei Objekten mit sechs Freiheitsgraden ausgedrückt werden. Dies geschieht über eine Transformation $R_x(A)$, $R_y(B)$, $R_z(C)$ und $T_{xyz}(X, Y, Z)$.

$$R_x(A) = \begin{pmatrix} 1 & 0 & 0 & 0 \\ 0 & \cos A & -\sin A & 0 \\ 0 & \sin A & \cos A & 0 \\ 0 & 0 & 0 & 1 \end{pmatrix}$$

$$R_y(B) = \begin{pmatrix} \cos B & 0 & \sin B & 0 \\ 0 & 1 & 0 & 0 \\ -\sin B & 0 & \cos B & 0 \\ 0 & 0 & 0 & 1 \end{pmatrix}$$

$$R_z(C) = \begin{pmatrix} \cos C & -\sin C & 0 & 0 \\ \sin C & \cos C & 0 & 0 \\ 0 & 0 & 1 & 0 \\ 0 & 0 & 0 & 1 \end{pmatrix}$$

$$T_{xyz}(X,Y,Z) = \begin{pmatrix} 1 & 0 & 0 & X \\ 0 & 1 & 0 & Y \\ 0 & 0 & 1 & Z \\ 0 & 0 & 0 & 1 \end{pmatrix}$$

$$TR_{xyz}(X,Y,Z,A,B,C) = T_{xyz}(X,Y,Z) \cdot R_x(A) \cdot R_y(B) \cdot R_z(C)$$

DE 36 11 337 A1 offenbart eine optoelektronische Anordnung, die in einer Kunststoffkugel untergebracht ist und gleichzeitig sechs Komponenten, nämlich Verschiebungen (X, Y, Z) entlang dreier Achsen und Winkeldrehungen (A, B, C) um drei Achsen von zwei relativ zueinander bewegbarer Objekte erfasst. Zu diesem Zweck werden sechs LEDs auf einem ersten, ortsfesten Objekt angeordnet. Das Licht dieser LEDs trifft auf Schlitzblenden, die an einem zweiten beweglichen Objekt angeordnet sind. Das durch die Schlitze fallende Licht wird mit Hilfe von positionsempfindlichen Lichtdetektoren, die das erste Objekt aufweist, erfasst und so die Position und/oder Bewegung der beiden relativ zueinander bewegbaren Objekte ermittelt. Die Relativbewegung oder Relativpositionen der beiden Objekte werden mit Hilfe von einer Regelelektronik und einer Recheneinheit (Mikroprozessor) als X, Y, Z, A, B und C Komponenten ausgegeben.

Aufgrund von geometrischen Abhängigkeiten des Strahlenganges dieser optischen Sensorik benötigt der vorstehend beschriebene Sensor eine Mindestgröße. Einer Miniaturisierung ist somit nur eingeschränkt möglich, da die benutzten optischen Elemente für eine korrekte optische Abbildung einen gewissen Abstand einhalten müssen. Ferner werden für die Erfassung aller sechs Verschiebung- und Verdrehungskoordinaten (X, Y, Z und A, B, C) mindestens sechs Sensoreinheiten, bestehend aus LED, Schlitzblende und Detektor, benötigt. Hierdurch ergibt sich eine Mindestanzahl an benötigten Komponenten. Folglich sind einer weitreichenden Miniaturisierung optoelektronischer Anordnungen zur Erfassung von Relativbewegungen und Relativpositionen Grenzen gesetzt.

Ferner sind optoelektronische Komponenten naturgemäß empfindlich gegenüber Verschmutzung. Es dürfen sich keine Fremdpartikel wie beispielsweise Schmutz oder Staub im Strahlengang befinden, die die optische Abbildung verfälschen. Es bedarf daher einer vorzugsweise abgeschlossenen, reinen Umgebung.

Anordnungen zum Erfassen von Relativbewegungen und/oder Relativpositionen werden insbesondere in industriellen Anwendungen eingesetzt. Einerseits lassen sich diese Anordnungen einsetzen, um beispielsweise Kräfte, Momente, Bewegungen und/oder Positionen zweier Objekte beispielsweise in Prüf- und Messständen für Kfz oder dergleichen zu erfassen. Andererseits finden diese Anordnungen Anwendung zur Steuerung von Robotern oder bei virtuellen Konstruktionen, insbesondere in 3D-Konstruktionssoftware. So können Eingabegeräte, die über eine solche Anordnung verfügen, beispielsweise 3D-Mäuse, dazu verwendet werden, Objekte in einer virtuellen 3D-Umgebung zu bewegen oder dem Benutzer selbst ein Manövrieren durch eine virtuelle 3D-Landschaft zu ermöglichen. Vorzugsweise finden diese Eingabegeräte zur Erstellung von 3D Konstruktionen mit Hilfe von CAD Programmen Anwendung. Darüber hinaus lassen sich Anordnungen zum Erfassen von Relativbewegungen und/oder Relativpositionen auch einsetzen in Joysticks, Spielkonsolen, Datenhandschuhen, Computertastaturen, Computermäusen, Trackpads oder Touchpads. Hierbei ist eine Miniaturisierung zur platzsparenden Integration in die elektronischen Geräte bevorzugt.

US 2014/0340372 offenbart ein Eingabegerät mit einem in einem Gehäuse beweglich angeordneten Aktuatoreinheit sowie mehrerer Sensoreinheiten mit einem Magneten und einem Mehrachsen-Magnetsensor zur Erfassung der Relativbewegung zwischen der Aktuatoreinheit und dem Gehäuse.

Aufgabe der Erfindung ist es, eine magnetische Anordnung zur Erfassung von Relativbewegungen und/oder Relativpositionen zu schaffen, die eine geringe Größe aufweist und über einen einfacheren Aufbau verfügt. Weiterhin besteht die Aufgabe der Erfindung darin ein Eingabegerät mit einer solchen magnetischen Anordnung zu schaffen, das ebenfalls eine geringe Größe sowie einen einfacheren Aufbau aufweist.

Die Lösung der Aufgaben erfolgt durch eine magnetische Anordnung gemäß Anspruch 1, durch ein Eingabegerät gemäß Anspruch 11 und durch ein mobiles Eingabegerät nach Anspruch 12.

Die erfindungsgemäße magnetische Anordnung zur Erfassung von Relativbewegungen und/oder Relativpositionen eines ersten und eines zweiten Objekts zueinander in sechs Komponenten, nämlich drei Verschiebungen und drei Winkeldrehungen in bzw. um die drei Achsen des kartesischen Koordinatensystems weist mindestens sechs Sensoreinheiten, um die drei Verschiebungen und die drei Winkeldrehungen zu erfassen, auf. Jede Sensoreinheit weist dabei mindestens einen Magnet und einen magnetoresistiven Sensor auf, wobei der mindestens eine Magnet der Sensoreinheit relativ zum magnetoresistiven Sensor der Sensoreinheit bewegbar ist. Jede der Sensoreinheit weist eine Sensorrichtung auf, entlang der der magnetoresistive Sensor eine Position des mindestens einen Magneten misst. Bevorzugt ist es, dass die magnetische Anordnung exakt sechs Sensoreinheiten aufweist, um die drei Verschiebungen und drei Winkeldrehungen zu erfassen, wobei jede Sensoreinheit insbesondere exakt einen Magneten und einen, diesem Magneten zugeordneten, magnetoresistiven Sensor aufweist.

Insbesondere beschreibt die Sensorrichtung eine Richtung, entlang der Sensor Veränderungen, insbesondere Bewegungen des Magneten erfassen, vorzugsweise messen kann. Besonders bevorzugt ist hierbei, dass bei Bewegungen des Magneten, lediglich der Anteil der Bewegung, welcher im Wesentlichen parallel zu der Sensorrichtung verläuft gemessen werden. Hierbei ist es nicht nötig, dass sich der Magnet parallel zu der Sensorrichtung bewegt. Liegt beispielsweise die Sensorrichtung waagerecht und bewegt sich der Magnet schräg, so misst der Sensor nur den Teil der Bewegung des Magneten, dessen Anteil parallel zur Sensorrichtung verläuft. In besonders bevorzugter Ausführungsform kann der Sensor positive und negative Positionsveränderungen erfassen und unterscheiden. Bei einer Rotation, also einer oder mehrere Winkeldrehungen der Objekte relativ zueinander führt der Magnet aufgrund der Entfernung vom Rotationszentrum, eine Kreisbewegung aus. Der translatorische Anteil der Kreisbewegung wird vom Sensor erfasst, während der rein rotatorische Anteil nahezu bzw. vollständig vom Sensor ignoriert wird.

Vorzugsweise handelt es sich bei der Relativbewegung, die insbesondere zwischen zwei Körpern erfolgt und die durch die magnetische Anordnung erfasst wird um Verschiebungen X, Y oder Z entlang der Achsen des kartesischen Koordinatensystems (X-, Y-, Z-Achse) und/oder um Winkeldrehungen A, B, C um die Achsen des kartesischen Koordinatensystems. Insbesondere handelt es sich bei der Relativposition um eine Position, welche durch Verschiebungen und/ oder Winkeldrehungen erreicht wird. Die Verschiebungen und Winkeldrehungen beschreiben darüber hinaus die sechs Freiheitsgrade der beiden Objekte.

Es ist auch denkbar, dass mehr als sechs Sensoreinheiten eingesetzt werden und mehrere Sensoreinheiten die Relativbewegungen und/ oder Relativpositionen überbestimmt erfassen. Somit kann eine höhere Messgenauigkeit, eine Validierung der Messung und eine Ausfallsicherung erreicht werden.

Erfindungsgemäß ist es, dass es sich bei den magnetoresistiven Sensoren um eindimensionale Sensoren handelt. Eindimensionale Sensoren weisen eine eindimensionale, auch als linear zu bezeichnende, Sensorrichtung auf, entlang der Bewegungsänderungen erfasst werden. Derartige Sensoren zeichnen sich u.a. dadurch aus, dass diese klein, kostengünstig und weitgehend resistent bzw. unanfällig für Fehler sind.

Erfindungsgemäß sind jeweils mindestens drei Sensoreinheiten als eine erste und als eine zweite Gruppe angeordnet. Die Sensorrichtungen der Sensoreinheiten der ersten Gruppe stehen dabei im Wesentlichen senkrecht zu den Sensorrichtungen der Sensoreinheiten der zweiten Gruppe. Somit erfassen die Sensoreinheiten der ersten Gruppe Verschiebungen entlang der X- und Y-Achse sowie die Winkeldrehung C um die Z-Achse. Die Sensoreinheiten der zweiten Gruppe erfassen die Verschiebung entlang der Z-Achse sowie die Winkeldrehungen A und B, um die X- bzw. Y-Achse. Vorzugsweise sind die Sensoreinheiten der ersten Gruppe waagrecht und die Sensoreinheiten der zweiten Gruppe senkrecht angeordnet. Mit anderen Worten kann die Lagebeziehung der Sensoreinheiten der ersten und der zweiten Gruppe derart erfolgen, dass die Sensoreinheiten der ersten Gruppe in Relation zu den Sensoreinheiten der zweiten Gruppe waagerecht stehen, wobei die Sensoren der zweiten Gruppe dann vertikal, und somit senkrecht relativ zu den Sensoren der ersten Gruppe stehen. Gemäß dieser Definition weist die erste Gruppe der Sensoreinheiten mindestens drei waagerechte Magnete und mindestens drei, diesen waagerechten Magneten zugeordnete, waagerechte magnetoresistive Sensoren auf. Die zweite Gruppe der Sensoreinheiten weist hiernach mindestens drei vertikale Magnete und mindestens drei, diesen Magneten zugeordnete, magnetoresistive Sensoren mit vertikaler Sensorrichtung auf. Die Lagedefinition bezüglich der Magnete bezieht sich auf die Verbindungslinie zwischen Nord- und Südpol eines jeweiligen Magneten. Liegt somit beispielsweise ein waagerechter und ein vertikaler Magnet vor, so steht die Verbindungslinie zwischen Nord- und Südpol des einen Magneten senkrecht auf der Verbindungslinie zwischen Nord- und Südpol des anderen Magneten.

Bevorzugt ist es, dass die insbesondere vertikalen Magnete der zweiten Gruppe der Sensoreinheiten mit dem gleichen Pol in die gleiche Richtung zeigen. Die vorzugsweise horizontalen Magnete der ersten Gruppe der Sensoreinheiten sind insbesondere bezüglich der Pole zueinander alternierend angeordnet. Durch eine derartige Anordnung ergeben sich gleichartige Magnetfeld-Verhältnisse.

Vorzugsweise sind die Sensoreinheiten der ersten und/ oder der zweiten Gruppe auf einem Kreisumfang, insbesondere mit einem Winkelabstand von jeweils 120° angeordnet. Bevorzugt ist es, dass bei insgesamt sechs Sensoreinheiten, diese Sensoreinheiten auf einem Kreisumfang mit jeweils einem Abstand von 60° zueinander angeordnet sind.

Bei der Verwendung von mehr als sechs Sensoreinheiten ist es bevorzugt, die Sensoreinheiten in der ersten und/ oder der zweiten Gruppe auf einem Kreisumfang mit gleichen Winkelabständen zueinander anzuordnen.

Vorzugsweise sind die beiden Ebenen, auf denen die beiden Kreisumfänge liegen, parallel und insbesondere echt parallel zueinander. Die beiden Ebenen können daher ineinander liegen oder parallel mit einem Abstand, also echt parallel, zueinander angeordnet sein. Soll beispielsweise die Relativbewegung eines senkrechten Kreiszylinders, der sich in einem Hohlzylinder befindet zu diesem Hohlzylinder erfasst werden, so können drei Sensoreinheiten, in einer ersten Gruppe, zur Erfassung der drei Freiheitsgrade, Verschiebungen X und Y sowie Winkeldrehung C in einer Ebene angeordnet sein, die insbesondere parallel zu der Grundfläche des Zylinders steht. Darüber hinaus sind die drei Sensoreinheiten auf einem Kreisumfang insbesondere jeweils mit einem Winkelabstand von 120° angeordnet. Ebenfalls werden drei anderen Sensoreinheiten, in einer zweiten Gruppe, zur Erfassung der drei Freiheitsgrade, Winkeldrehungen A und B sowie Verschiebung Z eingesetzt, die ebenfalls in einer Ebene, die insbesondere parallel zur Grundfläche des Zylinders ist, auf einem Kreisumfang insbesondere jeweils mit einem Winkelabstand von 120° angeordnet. In dieser Ausführungsform sind die beiden Ebenen, auf denen sich die beiden Kreisumfänge befinden, parallel zueinander, jedoch können die beiden Ebenen auch frei im Raum angeordnet sein. Es ist somit nicht zwingend notwendig, dass die beiden Ebenen parallel zu der Grundfläche eines Zylinders sind. Die sechs Sensoren sind im Wesentlichen im Raum so angeordnet, dass jede Verschiebung oder Winkeldrehung mindestens von zwei Sensoren erfasst wird. Die räumliche Anordnung der Sensoren erlaubt die Berechnung einer Eichmatrix, von der durch geeignete mathematische Umformungen die inverse Matrix (gleichviele Sensoren wie Freiheitsgrade) bzw. die Pseudoinverse (mehr Sensoren als Freiheitsgrade) berechnet werden kann. Die Eichmatrix stellt den Zusammenhang zwischen den erfassten Messwerten der Sensoren und der gewünschten Relativbewegung bzw. Relativposition her. Somit existieren im dreidimensionalen Raum insgesamt sechs Bewegungen (X, Y, Z und A, B, C).

Vorzugsweise werden magnetoresistive Sensoren vom Typ AMR (anisotroper magnetoresistiver Effekt), GMR (riesiger magnetoresisiver Effekt), CMR (kolossaler magnetoresitiver Effekt) oder TMR (tunnel magnetoresistiver Effekt) eingesetzt.

Ein magnetoresistiver Sensor erfasst die Feldlinien, die von einem Magnet ausgehen. Dabei wir die Richtung der Feldlinien gemessen und nicht die Feldstärke. Bewegen sich Magnet und magnetoresistiver Sensor relativ zueinander - entlang der messempfindlichen Sensorrichtung - kann der Sensor die Position zum Magnet messen. Bei Bewegungen, die senkrecht zur Richtung sind, führt diese zu keiner bzw. fast keiner Änderung der gemessenen Position.

Verschaltet man vier magnetoresistive Teilsensoren in einem Chip zu einer Wheastone'schen Messbrücke zusammen, erhält man zwei Spannungen, die abhängig vom vorhandenen Magnetfeld sind. Das Magnetfeld wird durch einen Magnet erzeugt und die resultierenden beiden Spannungen stellen das Sinus- bzw. Cosinus-Signal des Positionssensors dar.

Durch die Anwendung des Arkustangens $\alpha$ = arctan2(Cosinus-Signal, Sinus-Signal) können die beiden Sensor-Spannungen in den Winkel $\alpha$ zusammengefasst werden. Sein Wertebereich reicht von $-\pi$ bis $+\pi$. Darüber hinausgehende Werte führen zu nicht eindeutigen Messwerten, weil die Funktion arctan2() eine periodische Funktion - mit der Periode $2\pi$ - ist. Eine einfache Skalierung rechnet den Messwert Winkel $\alpha$ von $-\pi$ bis $+\pi$ auf einen Abstand - beispielsweise mm - um. Mit insgesamt sechs einzelnen Sensoreinheiten, liegen also sechs Messwerte $\alpha_1$, $\alpha_2$, $\alpha_3$, $\alpha_4$, $\alpha_5$, $\alpha_6$ vor.

Eine geeignete Eichmatrix kann die ermittelten sechs Abstände in die Koordinaten der Verschiebung (X, Y, Z) und Winkeldrehung (A, B, C) umrechnen.

Das Bewegen des Magneten entlang der für den magnetoresistiven Positionssensor empfindlichen Bewegungsrichtung, also der Sensorrichtung führt zu einer quasi linearen Änderung der gemessenen Position. Aus der geometrischen Anordnung der sechs einzelnen Sensoreinheiten der Anordnung kann die dazugehörige Eichmatrix M berechnet werden.

$$\begin{pmatrix} X \\ Y \\ Z \\ A \\ B \\ C \end{pmatrix} = \text{M} \begin{pmatrix} \alpha_1 \\ \alpha_2 \\ \alpha_3 \\ \alpha_4 \\ \alpha_5 \\ \alpha_6 \end{pmatrix}$$

Eine zweite Möglichkeit die Eichmatrix zu bestimmen, ist durch eine Kalibrierung gegeben. Dabei werden bekannte Auslenkungen der Anordnung vorgenommen und die dazugehörigen Messwerte aller Sensoreinheiten erfasst. Daraus lässt sich ebenfalls eine Eichmatrix berechnen.

Vorzugsweise handelt es sich bei mindestens einem Magnet, und insbesondere bei allen Magneten, um Dauermagneten.

Vorzugsweise sind die Magnete auf einem zweiten Objekt angeordnet. Bei diesem Objekt handelt es sich insbesondere um ein bewegliches Objekt. Die Sensoren sind vorzugsweise auf einem anderen ersten Objekt angeordnet, bei dem es sich insbesondere um ein unbewegliches Objekt handelt. Die Beweglichkeit der Objekte zueinander betrifft insbesondere Bewegungen der Objekte relativ zueinander. So ist es bevorzugt, dass das zweite Objekt relativ zum ersten Objekt beweglich ist. Vorzugsweise ist das erste Objekt fest mit der Umgebung verbunden, bspw. mit einem Tisch verbunden bzw. auf diesem angeordnet, so dass das erste Objekt relativ zur Umgebung unbeweglich ist, jedoch sich das zweiten Objekt relativ zum ersten Objekt bewegen kann. Auch ist es möglich, dass das erste Objekt derart ausgestaltet ist, dass es von einem Benutzer relativ zur Umgebung fixiert, bspw. gehalten, werden kann und somit keine Bewegung des ersten Objekts relativ zur Umgebung stattfindet, jedoch das zweite Objekt relativ zum ersten beweglich bleibt.

Vorzugsweise sind die Sensoren auf Platinen angeordnet. Es ist hierbei bevorzugt, die mindestens drei Sensoren der ersten Gruppe auf einer gemeinsamen Platine, insbesondere waagrecht anzuordnen. Es ist weiterhin bevorzugt, die mindestens drei weiteren Sensoren, der zweiten Gruppe auf einer Platine, insbesondere senkrecht anzuordnen. Vorzugsweise sind alle Sensoren auf einer gemeinsamen Platine angeordnet.

In einer weiteren Ausführungsform sind die Platinen mit einer Auswertevorrichtung und/oder Steuereinheit und/oder elektrischen Energiequelle verbunden. Mit Hilfe der elektrischen Energiequelle lassen sich die Sensoren mit elektrischer Energie versorgen. Die Auswertevorrichtung bzw. die Steuereinheit sorgt dafür, dass die detektierten Messgrößen der Sensoren insbesondere in elektrische Signale umgeformt und vorzugsweise in Maßeinheiten zur Darstellung der Relativbewegung und/oder Relativposition ausgegeben werden.

Vorzugsweise sind die Magnete starr miteinander verbunden. Hierbei können die Magnete direkt in eines der Objekte, insbesondere das bewegliche zweite Objekt eingebracht, bspw. eingeprägt werden, so dass die Magnete nicht mehr als Magnete wahrgenommen werden können, sondern Teil des Objekts sind.

Vorzugsweise sind die beiden Objekte elastisch miteinander verbunden. Diese elastische Verbindung kann insbesondere über mindestens ein, vorzugsweise über drei Federelemente erreicht sein. Auch mehr als drei Federelemente sind denkbar.

Vorzugsweise lassen sich die beiden Objekte entlang aller sechs Freiheitsgrade relativ zueinander bewegen. Es ist jedoch auch denkbar, dass zwischen den beiden Objekten Lager oder dergleichen eingesetzt werden und die Relativbewegung der beiden Objekte somit weniger Freiheitsgrade besitzt.

Vorzugsweise weist ein Objekt mindestens sechs Sensor und das andere Objekt mindestens sechs Magneten auf. Hierbei ist jedem Sensor des einen Objekts mindestens ein Magnet des anderen Objekts parallel zugeordnet, so dass sich eine Sensoreinheit ergibt.

Vorzugsweise weist das erste Objekt lediglich Sensoren und das zweite Objekt lediglich Magnete auf. Hierbei ist es besonders bevorzugt, dass alle Sensoren des ersten Objekts mit einer Platine verbunden sind, die vorzugsweise Teil des ersten Objekts ist oder dem ersten Objekt entspricht.

Eine weitere Ausführungsform, die besonders bevorzugt ist, zeichnet sich dadurch aus, dass das zweite Objekt unbeweglich bzw. ortsfest angeordnet ist und es sich bei dem ersten Objekt um ein bewegliches Objekt handelt. Es ist folglich unerheblich, ob das erste oder das zweite Objekt beweglich ist. Auch ist es denkbar, dass beide Objekte beweglich sind.

Vorzugsweise weist die magnetische Anordnung eine mechanische Begrenzung auf, die verhindert, dass jeder Magnet jeweils den Messbereich des ihm zugeordneten Sensors verlässt. Bei dieser mechanischen Begrenzung, auch Stopper genannt, handelt es sich insbesondere um mindestens eine Dämpfervorrichtung und/oder mindestens eine Anschlagvorrichtung. Neben diesem Einsatzzweck der mechanischen Begrenzung, lassen sich Anschlag- und/oder Dämpfervorrichtungen ebenfalls einsetzen, um gegebenenfalls gewünschte Bewegungseinschränkungen zwischen den beiden Objekten hervorzurufen. Die Dämpfervorrichtung kann darüber hinaus dafür eingesetzt werden, um Schwingungen zu verhindern, die auftreten können, wenn die Anordnung von einer ausgelenkten Lage in die Ruhelage zurück federt.

Vorzugsweise ist das zweite Objekt über Federelemente und/ oder Dämpferelemente mit dem ersten Objekt beweglich verbunden. Dadurch kann, nach einer Auslenkung, das bewegliche Objekt wieder in die Ausgangslage zurückkehren. Die Messwerte der Ausgangslage bestimmen hierbei den Ausgangspunkt der magnetischen Anordnung. Eine relative Verschiebung und/oder Winkeldrehung verursacht bei den eingesetzten Feder- und/oder Dämpferelementen eine Dehnung bzw. Stauchung. Mit Hilfe des Federgesetzes F = c . s - mit der Kraft F in [N], der Strecke s in [mm] und der Federkonstante c in $\left[\frac{N}{mm}\right]$ - können die auftretenden Kräfte ermittelt werden. Aufgrund der geometrischen Anordnung der Feder- und/oder Dämpferelemente, insbesondere dem Abstand zum Drehzentrum können auch Drehmomente auftreten. Die hier vorgestellte magnetische Anordnung kann dementsprechend auch Kräfte und/oder Momente erfassen. Mit einer geeigneten Eichmatrix kann die die magnetische Anordnung Kräfte und Drehmomente ermitteln und ausgeben.

Mit Hilfe des Gesetzes von Newton, das die Beziehung zwischen Kraft, Masse und Beschleunigung (F = m . a, F in [N], m in [kg] und a in $\left[\frac{m}{s^2}\right]$ ) herstellt, und dem äquivalenten Gesetz zur Beziehung zwischen Drehmoment, Massenträgheitsmoment und Winkelbeschleunigung (M = J . $\alpha$, M in [Nm], J in [kgm$^2$] und a in $\left[\frac{1}{s^2}\right]$ ), kann die magnetische Anordnung mit einer geeigneten Eichmatrix auch Beschleunigungen bzw. Winkelbeschleunigungen messen.

Bevorzugt ist es, dass das erste Objekt und/oder das zweite Objekt im Wesentlichen zylinderförmig ist. Eine Zylinderform beschreibt hierbei nicht nur eine Kreiszylinderform, sondern auch Prisma- oder Kegelformen sind damit umfasst.

Insbesondere ist das erste Objekt im Wesentlichen hohlzylinderförmig. Zusätzlich oder alternativ ist das zweite Objekt vorzugsweise im Wesentlichen vollzylinderförmig.

In bevorzugter Ausführungsform sind die Magnete, insbesondere ausschließlich, auf der Außenseite des zweiten Objekts angeordnet. Ist das zweite Objekt vollzylinderförmig ausgestaltet, so sind die Magnete vorzugsweise auf der Außenseite der Mantelfläche des Zylinders angeordnet. Weitergehend ist es bevorzugt, dass die magnetoresistiven Sensoren, insbesondere ausschließlich, auf der Innenseite des ersten Objekts angeordnet sind. Weist das erste Objekt eine Hohlzylinderform auf, so sind die magnetoresistiven Sensoren vorzugsweise auf der Innenseite der Mantelfläche des Hohlzylinders angeordnet.

Es ist bevorzugt, dass das zweite Objekt, insbesondere vollständig, innerhalb des ersten Objekts angeordnet ist. Mit einer derartigen Anordnungsdefinition ist es nicht zwingend erforderlich, dass das erste Objekt das zweite Objekt vollständig ummantelt, bzw. vollständig umgibt. Vielmehr ist mit einer derartigen Anordnungsdefinition gemeint, dass das zweite Objekt, insbesondere vollständig, innerhalb der Außenabmaße, auch als Kontur zu bezeichnen, des ersten Objekts angeordnet ist. Weist das erste Objekt eine Hohlzylinderform und das zweite Objekt eine Vollzylinderform auf, so ist es bevorzugt, dass der Vollzylinder innerhalb des Hohlzylinders angeordnet ist.

Weitergehend ist es bevorzugt, dass das zweite Objekt zwei sich im Wesentlichen gegenüberliegende Seiten aufweist. Diese beiden Seiten liegen sich je nach Ausgestaltung des zweiten Objekts vorzugsweise in longitudinaler Anordnung gegenüber. Handelt es sich bei dem zweiten Objekt beispielsweise um ein Objekt in Zylinderform, so entsprechen diese beiden Seiten vorzugsweise den Grundflächen des Zylinders. Diese beiden Seiten sowie die magnetische Anordnung an sich sind hierbei derart ausgeführt, dass ein Benutzer die eine Seite und/oder die andere Seite bewegen kann. Mit einer derartigen Bewegung ist die Auslenkung des zweiten Objekts über die Einwirkung auf eine oder beide Seiten gemeint. Demnach erfolgt über ein Einwirken eines Benutzers, beispielsweise über ein Auslenken mittels eines Fingers, eine Bewegung des zweiten Objekts relativ zum ersten Objekt. Die magnetische Anordnung kann hierbei beispielsweise derart ausgeführt sein, dass ein Benutzer mit seinem Finger in Berührung mit einer der Seiten kommt und hierdurch eine Auslenkung des zweiten Objekts auslöst. Andererseits ist es auch möglich, dass die magnetische Anordnung derart ausgeführt ist, dass ein Benutzer beispielsweise mit zwei Fingern, wie dem Daumen und dem Zeigefinger, mit beiden Seiten in Kontakt kommt und derart eine Auslenkung des zweiten Objekts relativ zum ersten Objekt entlang der drei Verschiebungen und entlang der drei Winkeldrehungen vornehmen kann.

Das Eingabegerät, insbesondere 3D Eingabegerät weist eine erfindungsgemäße magnetische Anordnung auf und zeichnet sich darüber hinaus dadurch aus, dass es sich bei dem zweiten Objekt, das insbesondere beweglich ist, um eine Kappe, also einen auf einer Seite abgeschlossenen Hohlzylinder beispielsweise mit Kugelform handelt. Besonders bevorzugt ist es, das alle Komponenten der magnetischen Anordnung zumindest teilweise innerhalb dieser Kappe angeordnet sind.

Vorzugsweise sind alle Komponenten der magnetischen Anordnung bis auf das erste, insbesondere ortsfeste Objekt, innerhalb der Kappe angeordnet. Hierdurch können die Komponenten beispielsweise vor äußeren Einflüssen wie Schmutz, Wasser, störenden Magnetfelder, usw. geschützt werden. Hierbei bildet das ortsfeste Objekt eine Art Basis, auf der die Kappe angeordnet ist, in der sich alle weiteren Komponenten der magnetischen Anordnung befinden.

Diese Kappe kann vorzugsweise von einem Benutzer mit der Hand, insbesondere teilweise umfasst werden. Somit kann ein Benutzer dreidimensionale Bewegungen über die Kappe auf die magnetische Anordnung übertragen, die dann als Eingaben beispielsweise an einen Computer weitergegeben werden. Auch ist es möglich, dass das zweite Objekt derart ausgestaltet ist, dass ein Benutzer mit einem oder mehreren Fingern eine Bewegung des zweiten Objekts relativ zum ersten Objekt hervorrufen kann.

Anstatt der Kappenform für das zweite Objekt ist nahezu jede andere erdenkliche Form für das zweite Objekt möglich. So kann es sich bei dem zweiten Objekt auch um eine, insbesondere runde oder eckige Platte, einen Teil einer Kugelschale, eine Kugel, einen Zylinder, einen Quader, oder dergleichen handeln. Bevorzugt ist es hierbei, dass das zweite Objekt die Form des Teils eines Eingabegeräts aufweist, das ein Benutzer in der Hand hält; beispielsweise die Form einer Mausoberfläche, die Form einer 3D-Mausoberfläche, die Form eines Steuerknüppels, etc.

In einer weiteren Ausführungsform ist es ebenfalls möglich, dass das erste Objekt eine der vorgenannten Formen aufweist.

Das erfindungsgemäße mobile Eingabegerät weist ein Mobilgerät, wie beispielsweise ein Mobiltelefon oder einen Tabletcomputer oder ein Laptop oder ein Navigationsgerät oder dergleichen, sowie eine erfindungsgemäße magnetische Anordnung gemäß der oben aufgeführten Definition auf. Das Mobilgerät ist hierbei mit dem ersten Objekt der magnetischen Anordnung drehfest verbunden. Mit drehfest ist hierbei eine derartige Verbindung gemeint, so dass bei Bewegung bzw. Auslenkung des ersten Objekts ebenfalls eine Auslenkung des Mobilgeräts und umgekehrt erfolgt. Bevorzugt ist es, dass diese drehfeste Verbindung als einstückige Verbindung ausgeführt ist. Eine derartige Verbindung wird auch als integriert bezeichnet.

In bevorzugter Ausführungsform entspricht der Prozessor des Mobilgeräts einer Auswertevorrichtung und/oder einer Steuereinheit der magnetischen Anordnung. Folglich wird zur Auswertung und/oder Steuerung der magnetischen Anordnung der in jedem Mobilgerät vorhandene Prozessor verwendet. Hierzu ist es bevorzugt, dass die magnetoresistiven Sensoren der magnetischen Anordnung datenübertragend mit dem Prozessor, beispielsweise über Kabel, Leiterbahnen oder dergleichen, verbunden sind.

Insbesondere entspricht die Energiequelle des Mobilgeräts, beispielsweise der Akku des Mobilgeräts, der Energiequelle der magnetischen Anordnung. Infolgedessen kann zur Versorgung der magnetischen Anordnung mit Energie auf die Energiequelle des Mobilgeräts zurückgegriffen werden und es bedarf keiner zusätzlichen Energiequelle. Hierbei ist es bevorzugt, dass die magnetoresistiven Sensoren der magnetischen Anordnung energieübertragend, beispielsweise über Kabel, mit der Energiequelle des Mobilgeräts verbunden sind.

Gemäß oben beschriebener vorzugsweiser Ausführungsform sind, insbesondere lediglich, die magnetoresistiven Sensoren mit der Energiequelle und/oder dem Prozessor des Mobilgeräts verbunden. Da Magnete, insbesondere ausgeführt als Dauermagnete, keinerlei Energiequelle oder Auswertevorrichtung benötigen, ist eine derartige Anordnung vorteilhaft. Demnach ist es auch bevorzugt, dass alle magnetoresistiven Sensoren mit dem ersten Objekt und somit insbesondere mit dem Mobilgerät verbunden sind und alle Magnete mit dem zweiten Objekt verbunden sind.

In bevorzugter Ausführungsform ist die magnetische Anordnung, insbesondere vollständig, innerhalb des Mobilgeräts angeordnet. Eine derartige Anordnungsdefinition bezieht sich erneut auf eine Anordnung der magnetischen Anordnung innerhalb der Kontur des Mobilgeräts. Bevorzugt ist hierbei beispielsweise eine derartige Anordnung, in der das erste Objekt, insbesondere ausgeführt als Hohlzylinder, in der magnetischen Anordnung innerhalb des Mobilgeräts eingelassen ist und sich das zweite Objekt, insbesondere in Vollzylinderform, innerhalb des ersten Objekts befindet.

Es ist bevorzugt, dass das zweite Objekt der magnetischen Anordnung von der Unterseite und/oder der Oberseite des Mobilgeräts durch einen Benutzer bewegbar ist, vorzugsweise durch Greifen. Beispielsweise gemäß der oben aufgeführten Beschreibung, in der das erste Objekt in das Mobilgerät eingelassen ist, ist hierbei das erste Objekt und das zweite Objekt derart angeordnet, dass ein Benutzer, z.B. mit Daumen und Zeigefinger, zwei Seiten des zweiten Objekts berühren kann und derart eine Bewegung des zweiten Objekts relativ zum ersten Objekt entlang der sechs Komponenten vornehmen kann. Ein derartiger Zugriff eines Benutzers auf das zweite Objekt erfolgt hierbei insbesondere von der Ober- und der Unterseite des Mobilgeräts. Handelt es sich bei dem Mobilgerät beispielsweise um ein Mobiltelefon, so entspricht die Oberseite der Displayseite und die Unterseite der dieser gegenüberliegenden Seite.

Es zeigen:

Fig. 1             eine schematische Draufsicht des erfindungsgemäßen Eingabegeräts, mit der erfindungsgemäßen magnetischen Anordnung zur Erfassung von Relativbewegungen und/oder Relativposition,

Fig. 2             eine schematische Draufsicht des erfindungsgemäßen Eingabegeräts gemäß einer weiteren Ausführungsform, mit der erfindungsgemäßen magnetischen Anordnung der zur Erfassung von Relativbewegungen und/oder Relativposition,

Fig. 3             eine schematische Seitenansicht des erfindungsgemäßen Eingabegeräts aus Fig. 1 mit der magnetischen Anordnung zur Erfassung von Relativbewegungen und/oder Relativpositionen,

Fig. 4             eine geschnittene Seitenansicht des erfindungsgemäßen Eingabegeräts gemäß Ansicht aus Fig. 2, die die Anordnung der Magnete dieser Ausführungsform zeigt,

Fig. 5             eine geschnittene Seitenansicht des erfindungsgemäßen Eingabegeräts gemäß Ansicht aus Fig. 2, die die Anordnung der Sensoren dieser Ausführungsform zeigt, und

Fign. 6a, 6b, 6c   schematische Front-, Rück- und Seitenansichten eines erfindungsgemäßen mobilen Eingabegeräts.

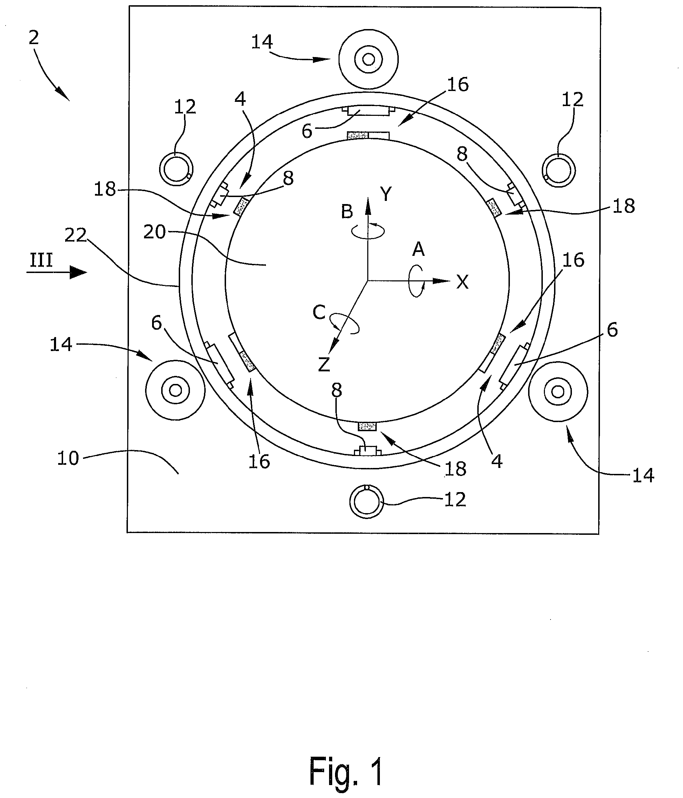

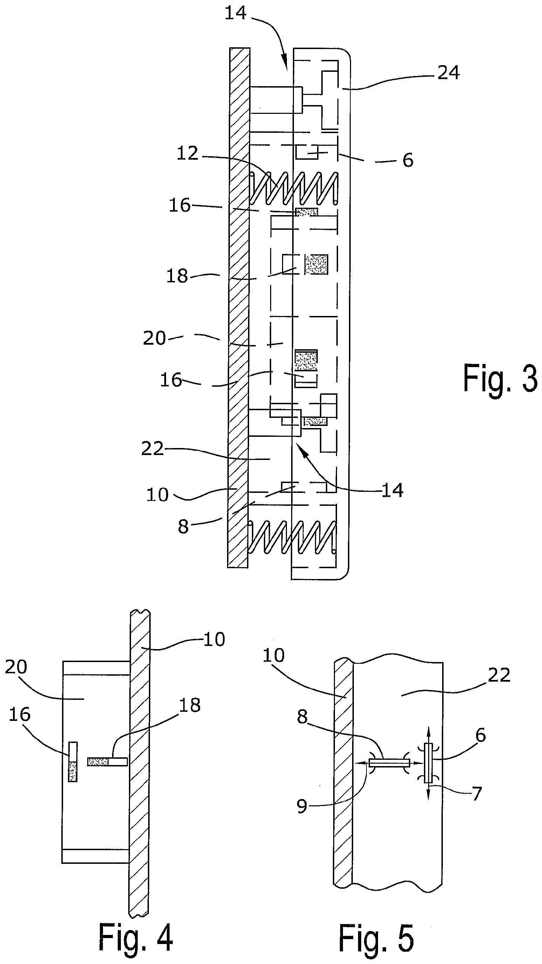

Die erfindungsgemäße magnetische Anordnung zur Erfassung von Relativbewegungen und/oder Relativpositionen 2 gemäß Fig. 1 weist sechs Sensoreinheiten 4 auf (beispielhaft sind nur zwei Sensoreinheiten 4 mit einem Bezugszeichen versehen), wobei jede Sensoreinheit einen Magneten 16, 18 und einen Sensor 6, 8 aufweist. Die Magnete 16, 18 sind an der Mantelfläche eines Zylinders 20 angeordnet. Die dargestellt Ausführungsform weist hierbei drei waagerechte Magnete 16 und drei senkrechte Magnete 18 auf. Die drei waagerechten Magnete 16, sind auf einem Kreisumfang angeordnet, der entlang der Mantelfläche des Zylinders verläuft, und weisen jeweils einen Winkelabstand von 120° zueinander auf. Auch die drei senkrechten Magnete 18 sind auf einem Kreisumfang angeordnet und ebenfalls in einem Winkelabstand von 120° zu einander angeordnet. In dieser Ausführungsform liegen alle Magnete 16, 18 auf einem gemeinsamen Kreisumfang und sind alternierend in einem Winkelabstand von 60° zueinander angeordnet. Der Zylinder 20 befindet sich im dargestellten Ausführungsbeispiel innerhalb des Hohlzylinders 22. Der Zylinder 20, der die Magnete 16, 18 aufweist ist hierbei frei beweglich angeordnet relativ zum Hohlzylinder 22. Gegenüber den jeweiligen waagerechten Magneten 16 befindet sich an der Innenfläche des Hohlzylinders 22 ein waagerechter Sensor 6. Gegenüber den jeweiligen senkrechten Magneten 18 befindet sich an der Innenseite des Hohlzylinders 22 ein senkrechter Sensor 8. Bei den Sensoren 6, 8 handelt es sich um magnetoresistive Sensoren. Diese magnetoresistiven Sensoren 6, 8 sind derart angeordnet, dass sie dem jeweiligen Magnet parallel gegenüberliegen und eine Sensorrichtung 7, 9, wie in Fig. 5 dargestellt, aufweisen, die ebenfalls parallel zu den Magneten, insbesondere zu dessen Magnetisierungsrichtung verläuft. Insbesondere ist hierbei die Sensorrichtung 7 parallel zu der direkt gegenüber am Zylinder 20 anliegenden Tangente.

Die Magnete 16 und 18 sind hier stabförmig ausgebildet und verfügen über eine kreisförmige, quadratische, rechteckige oder eine beliebige andere Grundform. An einem Ende befindet sich der Nordpol und am anderen Ende befindet sich der Südpol des Magneten. Für ein symmetrisches Gesamtmagnetfeld, werden die Magnete vorzugsweise gleichartig in Bezug auf dem Nordund Südpol angeordnet. Ist die Einflussnahme zwischen den verschiedenen Magneten 16 und 18 vernachlässigbar, können die Magnete auch beliebig orientiert angeordnet werden.

Sensor 6 und gegenüber zugeordneter Magnet 16 sowie Sensor 8 und gegenüber zugeordneter Magnet 18 bilden jeweils eine Sensoreinheit 4. Die Sensorrichtung 7, 9 verläuft im dargestellten Ausführungsbeispiel parallel zu der längs verlaufenden Mittellinie der hier rechteckig dargestellten Sensoren 6, 8. Die Sensoren 6, 8 erfassen Bewegungen des jeweils zugeordneten Magneten 16, 18 entlang der Sensorrichtung 7, 9.

Führt der Zylinder 20, der hier das zweite Objekt 20 darstellt, beispielsweise Verschiebungen bzw. eine Translation auf der XY-Ebene aus, erfassen im dargestellten Ausführungsbeispiel mindestens zwei der Sensoren 6 eine positive oder negative lineare Bewegung entlang der Sensorrichtung 7. Verläuft die Verschiebung exakt senkrecht zu der Sensorrichtung 7 eines der Sensoren 6, erfasst dieser Sensor keine bzw. nahezu keine Bewegung. Ansonsten können alle drei Sensoren 6 eine positive oder eine negative Bewegung erfassen. Erfolgt eine zweite, von der ersten verschiedene, Verschiebung des Zylinders 20 in der XY-Ebene, wird diese ebenfalls von den Sensoren 6 als positive oder negative Bewegung erfasst. Mit Hilfe der Sensoren 6 lassen sich somit jegliche Verschiebungen in der XY-Ebene erfassen.

Erfolgt eine Winkeldrehung des Zylinders 20 um die Z-Achse, also eine Rotation auf der XY-Ebene, auch Gieren genannt, wird diese ebenfalls durch die Sensoren 6 erfasst. Hierbei nehmen die Sensoren 6 alle gemeinsam eine je nach Rotationsrichtung positive oder negative Bewegung des Zylinders 20 wahr. Aufgrund der gleichzeitig wahrgenommenen positiven oder negativen Bewegung kann die entsprechende Rotation, bzw. das Gieren, erfasst werden.

Erfolgt eine Verschiebung des Zylinders 20 entlang der Z-Achse wird diese von allen senkrechten Sensoren entlang der Sensorrichtung 9 der senkrechten Sensoren 8 als positive oder negative Bewegung erfasst.

Erfolgt eine Winkeldrehung um die X-Achse auch Rollen genannt und/oder eine Winkeldrehung um die Y-Achse auch Nicken genannt, wird diese ebenfalls von den drei senkrechten Sensoren 8 erfasst. Je nach Rotationsbewegung erfassen die senkrechten Sensoren 8 dabei eine positive oder negative Bewegung entlang der Sensorrichtung 9. Mit Hilfe einer Kombination dieser positiven und/oder negativen Bewegungen lässt sich bestimmen, ob es sich um ein Rollen und/oder Nicken handelt.

Der Richtungsvektor 7 bzw. 9 ist in Wirklichkeit ein Einheitsvektor mit Start- und Endpunkt. Also ein Vektor der in eine Richtung und nicht in beide Richtungen des Sensors wie in Fig. 5 beispielhaft dargestellt, zeigt. Erfolgt die Bewegung des Sensors in Richtung des Vektors ist der erfasste Wert positiv, im anderen Fall ist er negativ.

Durch eine Kombination der Messungen der sechs Sensoren 6, 8 lassen sich alle Bewegungen entlang der sechs Freiheitsgrade des Zylinders 20 erfassen.

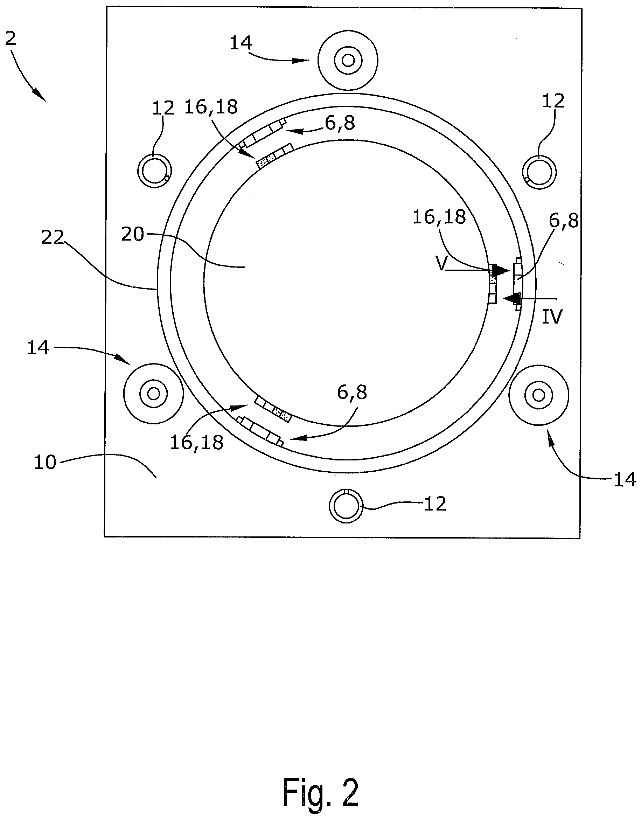

Fig. 2 zeigt eine weitere Ausführungsform der magnetischen Anordnung 2, die eine andere Anordnung der Magnete 16, 18 und der magnetoresistiven Sensoren 6, 8 aufweist. Gleiche oder ähnliche Elemente werden dabei mit den gleichen Bezugszeichen gekennzeichnet. Anstatt der alternierenden Anordnung der senkrechten Magnete 18 und der waagerechten Magnete 16 entlang dem Umfang des Zylinders 20, wie in Fig. 1 dargestellt, zeigt Fig. 2 eine paarweise übereinanderliegende Anordnung der Magnete 16, 18. Hierbei ist jeweils ein waagerechter Magnet 16 über einem senkrechten Magnet 18, wie in Fig. 4 dargestellt, angeordnet. Diese Magnetpaare sind auf einem Kreisumfang, der auf der Mantelfläche des Zylinders liegt, jeweils mit einem Winkelabstand von 120° zueinander angeordnet. Der Zylinder 20 ist innerhalb eines Hohlzylinders 22, der hier beispielhaft das erste Objekt 22 darstellt, angeordnet, auf dessen Innenseite sich die Sensoren 6, 8 befinden. Die Sensoren 6, 8 sind paarweise derart angeordnet, so dass ein waagerechter Sensor 6 über einem senkrechten Sensor 8 liegt, wie in Fig. 5 dargestellt und dieses Sensorpaar jeweils einem Magnetpaar gegenüberliegend angeordnet ist. Die Sensorpaare sind hierbei ebenfalls auf einem Kreisumfang, der sich auf der Innenseite des Hohlzylinders befindet mit demselben Winkelabstand von 120° zueinander angeordnet. Die Erfassung der Relativbewegung und Relativposition erfolgt hierbei in Anlehnung an die Erfassung wie vorstehend zu Fig. 1 erläutert.

Die unterschiedlichen Ausführungsformen aus Fig. 1 und Fig. 2 zeigen beispielhaft, dass nahezu jede Anordnung der Sensoreinheiten 4 gewählt werden kann. So ist es nicht zwingend erforderlich, dass die Sensoren 6, 8 bzw. die Magnete 16, 18 jeweils auf einer Ebene angeordnet sind oder auf einem Kreisumfang liegen. Beispielsweise können die Sensoren 6, 8 oder Magnete 16, 18 in unterschiedlichen Höhen oder unterschiedlichen Winkelabständen angeordnet werden. Darüber hinaus ist es möglich, die Sensoren 6, 8 auf dem inneren Zylinder anzubringen und die Magnete 16, 18 auf dem äußeren Hohlzylinder zu befestigen. Auch ist es möglich, dass der innere Zylinder sowohl Magnete als auch Sensoren aufweist. Der äußere Hohlzylinder kann ebenfalls Magnete und Sensoren aufweisen. Darüber hinaus ist es möglich, jegliche Anzahl an Magneten und Sensoren in die magnetische Anordnung 2 zu integrieren.

Generell ist es zu bevorzugen, die Magnete 16, 18 und/ oder die Sensoren 6, 8 mit möglichst weitem Abstand zueinander anzuordnen, um Interferenzen dieser untereinander zu vermeiden.

Das Objekt 20 ist hierbei, wie in Fig. 3 beispielhaft dargestellt, mit dem zweiten Objekt 22 verbunden. Diese Verbindung erfolgt hierbei, vollständig oder zumindest teilweise über Dämpfer- und/oder Anschlagseinrichtungen 14 und/oder über Federelemente 12. Somit sind das erste Objekt 22 und das zweite Objekt 20 elastisch miteinander verbunden. Bei dem ersten Objekt handelt es sich hierbei beispielhaft um einen Hohlzylinder 22. Das zweite Objekt ist hier beispielhaft als Zylinder 20 dargestellt. Die Anordnung der Magnete 16, 18 und Sensoren 6, 8 ist, wie oben beschrieben, auf dem Zylinder 20 und dem Hohlzylinder 22 ausgeführt.

In diesen Ausführungsformen weist das erste Objekt 22 lediglich Sensoren 6, 8 auf und das zweite Objekt 20 verfügt lediglich über Magnete 16, 18.

In den hier dargestellten Ausführungsformen ist es möglich, dass das erste Objekt 22 eine Platine aufweist, die mit einer nicht dargestellten Auswertvorrichtung und/oder eine Steuereinheit und/oder einer elektrischen Energiequelle verbunden ist. Vorzugsweise handelt es sich hierbei um eine einzelne Platine, mit der alle Sensoren 6, 8 verbunden sind.

In den dargestellten Ausführungsformen der Figuren 1 und 2 ist das erste Objekt 22 fest mit der Platte 10 verbunden. Auf dieser Platte sind, wie dargestellt, drei Dämpfer- und/oder Anschlagseinrichtungen 14 sowie drei Federelemente 12 angeordnet. Es ist auch möglich, dass ausschließlich Dämpferelemente 14 oder ausschließlich Federelemente 12 bzw. weniger oder mehr Federelemente 12 oder Dämpferelemente 14 eingesetzt werden. In den dargestellten Ausführungsformen weisen die Federelemente 12 und die Dämpferelemente 14 jeweils einen Winkelabstand von 120° zueinander auf. Auch dies ist nicht zwingend erforderlich und es kann eine andere Anordnung gewählt werden. Das zweite Objekt 20 ist, wie beispielsweise in Fig. 3 dargestellt, mit den Federelementen 12 und den Dämpferelementen 14 verbunden. Somit ist das zweite Objekt 20 beweglich und insbesondere beweglich zu dem ersten Objekt 22 angeordnet. In den dargestellten Ausführungsformen ist eine Bewegung des zweiten Objekts 20 entlang aller sechs Freiheitsgrade relativ zum ersten Objekt 22 möglich. Andererseits ist es denkbar, dass mit Hilfe der Dämpferelemente 14 und/oder der Federelemente 12 und/oder nicht dargestellten Lagerelementen eine Bewegungseinschränkung vorgenommen wird und sich das zweite Objekt 20 entlang fünf oder weniger Freiheitsgrade bewegen kann. Neben den dargestellten Ausführungsformen ist es auch denkbar, dass anstatt des zweiten Objekts 20 das erste Objekt 22 relativ zum zweiten Objekt 20 bewegbar ist und somit das zweite Objekt 20 ortsfest angeordnet ist.

In der in Fig. 3 dargestellten Ausführungsform ist die bewegliche Verbindung der beiden Objekte 20, 22 mit einer Kappe 24 realisiert. Das zweite Objekt 20 ist hierbei an der Unterseite der Kappe 24 angeordnet, die ebenfalls an der Unterseite mit Federelementen 12 und Dämpferelementen 14 mit der Platte 10 verbunden ist. Somit ist die Kappe 24 und damit das zweite Objekt 20 beweglich mit der Platte 10 und somit auch mit dem ersten Objekt 22 verbunden.

Ebenfalls ist in Fig. 3 ein erfindungsgemäßes Eingabegerät dargestellt, das die erfindungsgemäße magnetische Anordnung 2 aufweist. Beispielsweise handelt es sich bei dem Eingabegerät um eine 3D-Maus zur Bedienung einer Konstruktionssoftware. Die Kappe 24 stellt hierbei die Berührungsfläche bzw. das dem Benutzer zugängliche Eingabeobjekt dar. Ein Benutzer kann die Kappe 24 mit einer Hand umschließen und diese entlang der sechs Freiheitsgrade auslenken bzw. in Bewegung versetzen. Mit Hilfe der erfindungsgemäßen magnetischen Anordnung 2 werden diese Auslenkungen und Bewegungen aufgenommen, verarbeitet und beispielsweise an einen Computer oder Roboter weitergegeben.

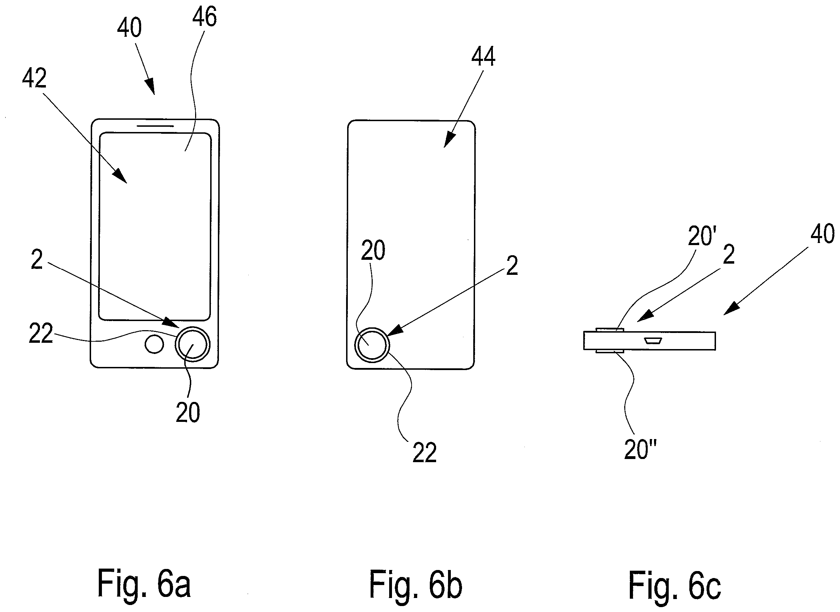

Die Figuren 6a, 6b und 6c zeigen ein erfindungsgemäßes mobiles Eingabegerät. In dargestellter Ausführungsform handelt es sich bei dem mobilen Eingabegerät um ein Mobiltelefon 40, wobei in Fig. 6a die Vorderseite, in Fig. 6b die Rückseite und in Fig. 6c eine Seitenansicht dargestellt ist.

Das Mobiltelefon 40 aus Fig.6a weist eine Oberseite 42 mit einem Display 46 auf. In das Mobiltelefon 40 ist eine erfindungsgemäße magnetische Anordnung 2 eingelassen. Hierbei ist das erste Objekt 22 der magnetischen Anordnung einstückig mit dem Mobiltelefon 40 verbunden. Diese Verbindung ist in dargestellter Ausführungsform derart vorgenommen, dass es sich bei dem ersten Objekt um einen Hohlzylinder handelt, der derart in das Mobiltelefon 40 eingelassen ist, dass der Zylinder von der Oberseite 42 zur Unterseite 44 des Mobiltelefons 40 verläuft. Innerhalb des hohlzylinderförmigen ersten Objekts 22 ist das als Vollzylinder ausgeführte zweite Objekt 20 angeordnet. Wie in Fig. 6c zu sehen, ragt das Objekt 20 mit zwei Seiten 20', 20" über die Außenabmessungen des Mobiltelefons hinaus. Derart kann das zweite Objekt 20, beispielsweise mittels Zeigefinger und Daumen eines Benutzers, von unten und oben an den beiden Seiten 20', 20" gegriffen werden und derart relativ zum ersten Objekt 22 in Bewegung versetzt werden. In der Ausführungsform ist es bevorzugt, dass die magnetoresistiven Sensoren 6, 8 mit dem ersten Objekt 22 verbunden sind, insbesondere auf der Innenfläche des hohlzylinderförmigen ersten Objekts 22 angeordnet sind. Die Magnete 16, 18 hingegen sind mit dem zweiten Objekt 20 verbunden, insbesondere an der Mantelfläche des zylinderförmigen zweiten Objekts 20, angeordnet.

In dargestellter Ausführungsform ragt das zweite Objekt 20 über die Außenabmessungen des Mobiltelefons 40 hinaus. Dies ist jedoch nicht zwingend erforderlich. So ist es ebenso möglich, dass das zweite Objekt 20 bündig mit dem Mobiltelefon 40 abschließt. Auch ist es möglich, dass das zweite Objekt 20 Mulden bzw. Einlassungen, beispielsweise an den Seiten 20', 20", aufweist und derart in die Außenmaße des Mobiltelefons 40 hineinragt.

## Patentansprüche

1.   Magnetische Anordnung (2) zur Erfassung von der Relativbewegung und/ oder Relativposition eines ersten und eines zweiten Objekts zueinander in sechs Komponenten, nämlich drei Verschiebungen und drei Winkeldrehungen in bzw. um die drei Achsen des kartesischen Koordinatensystems mit
mindestens sechs Sensoreinheiten (4), um die drei Verschiebungen und die drei Winkeldrehungen zu erfassen, wobei jede Sensoreinheit (4) mindestens einen Magnet (16, 18) und einen magnetoresistiven Sensor (6, 8) aufweist, wobei der mindestens eine Magnet (16, 18) der Sensoreinheit (4) relativ zum magnetoresistiven Sensor (6, 8) der Sensoreinheit (4) bewegbar ist
und wobei jede Sensoreinheit (4) eine Sensorrichtung (7, 9) aufweist, wobei der magnetoresistive Sensor (6, 8) eine Position des mindestens einen Magneten (16, 18) entlang der Sensorrichtung (7, 9) misst, **dadurch gekennzeichnet, dass** es sich bei den magnetoresistiven Sensoren (6, 8) um eindimensionale Sensoren handelt und eine erste und eine zweite Gruppe aus jeweils mindestens drei Sensoreinheiten (4) vorgesehen ist, wobei die Sensorrichtungen (7, 9) der Sensoreinheiten (4) der ersten Gruppe im Wesentlichen senkrecht zu den Sensorrichtungen (7, 9) der Sensoreinheiten (4) der zweiten Gruppe stehen und mit jeweils entsprechend orientierten, gegenüberliegenden Magneten wechselwirken.

2.   Magnetische Anordnung (2) nach Anspruch 1, **dadurch gekennzeichnet, dass** die Sensoreinheiten (4) der ersten und/ oder der zweiten Gruppe auf jeweils einem Kreisumfang, insbesondere mit gleichem Winkelabstand, vorzugsweise von 120° angeordnet sind, wobei insbesondere die beiden Ebenen, auf denen die beiden Kreisumfänge liegen, parallel und insbesondere echt parallel sind.

3.  Magnetische Anordnung (2) nach einem der Ansprüche 1 oder 2, **dadurch gekennzeichnet, dass** die Magnete (16, 18) auf dem, insbesondere beweglichen zweiten Objekt (20) angeordnet sind und die magnetoresistiven Sensoren (6, 8) auf dem, insbesondere unbeweglichen ersten Objekt (22) angeordnet sind.

4.  Magnetische Anordnung (2) nach einem der Ansprüche 1 bis 3, **dadurch gekennzeichnet, dass** die magnetoresistiven Sensoren (6, 8) auf einer, insbesondere gemeinsamen Platine angeordnet sind, die mit einer Auswertvorrichtung und/ oder einer Steuereinheit und/ oder einer elektrischen Energiequelle verbunden ist.

5.  Magnetische Anordnung (2) nach einem der Ansprüche 1 bis 4, **dadurch gekennzeichnet, dass** die Magnete (16, 18) starr miteinander verbunden und insbesondere als gemeinsame Anordnung auf dem, insbesondere beweglichen zweiten Objekt (20) angeordnet, vorzugsweise eingeprägt sind.

6.  Magnetische Anordnung (2) nach einem der Ansprüche 1 bis 5, **gekennzeichnet durch** eine mechanische Begrenzung, insbesondere eine Dämpfer- und/ oder eine Anschlageinrichtung (14), wobei durch die mechanische Begrenzung verhindert wird, dass jeweils der Magnet (16, 18) den jeweiligen Messbereich des ihm zugeordneten magnetoresistiven Sensors (6, 8) verlässt.

7.  Magnetische Anordnung (2) nach einem der Ansprüche 1 bis 6, **dadurch gekennzeichnet, dass** das erste Objekt (22) und das zweite Objekt (20), vorzugsweise elastisch, besonders bevorzugt über mindestens ein Federelement (12) miteinander verbunden und relativ zueinander bewegbar sind.

8.  Magnetische Anordnung (2) nach einem der Ansprüche 1 bis 7, **dadurch gekennzeichnet, dass** das erste Objekt (22) und/oder das zweite Objekt (20) im Wesentlichen zylinderförmig, insbesondere kreiszylinderförmig, ist.

9.  Magnetische Anordnung (2) nach einem der Ansprüche 1 bis 8, **dadurch gekennzeichnet, dass** die Magnete (16, 18), insbesondere ausschließlich, auf einer Außenseite des zweiten Objekts (20) und die magnetoresistiven Sensoren (6, 8), insbesondere ausschließlich, auf einer Innenseite des ersten Objekts (22) angeordnet sind.

10. Magnetische Anordnung (2) nach einem der Ansprüche 1 bis 9, **dadurch gekennzeichnet, dass** das zweite Objekt (20) zwei sich im Wesentlichen gegenüberliegende, insbesondere im Wesentlichen longitudinal gegenüberliegende, Seiten aufweist, wobei die magnetische Anordnung (2) derart ausgeführt ist, dass ein Benutzer die eine Seite und/oder die andere Seite bewegen kann.

11. Eingabegerät, **gekennzeichnet durch** eine magnetische Anordnung (2) nach einem der Ansprüche 1 bis 10, wobei das, insbesondere bewegliche, zweite Objekt (20) eine Zylinder- oder Kugelform aufweist, um als Auflagefläche für die Hand oder mindestens einen Finger eines Benutzers zu agieren.

12. Mobiles Eingabegerät mit einem Mobilgerät (40), insbesondere Mobiltelefon oder Tabletcomputer oder Laptop oder Navigationsgerät, und mindestens einer magnetischen Anordnung (2) nach einem der Ansprüche 1 bis 10, wobei das Mobilgerät (40) mit dem ersten Objekt der magnetischen Anordnung (2) drehfest verbunden ist.

13. Mobiles Eingabegerät nach Anspruch 12, **dadurch gekennzeichnet, dass** der Prozessor des Mobilgeräts (40) einer Auswertvorrichtung und/oder einer Steuereinheit der magnetischen Anordnung (2) entspricht.

14. Mobiles Eingabegerät nach Anspruch 12 oder 13, **dadurch gekennzeichnet, dass** die Energiequelle des Mobilgeräts (40), insbesondere der Akku des Mobilgeräts (40), einer Energiequelle der magnetischen Anordnung (2) entspricht.

15. Mobiles Eingabegerät nach einem der Ansprüche 12 bis 14, **dadurch gekennzeichnet, dass** die magnetische Anordnung (2), insbesondere vollständig, innerhalb des Mobilgeräts (40) angeordnet ist und/oder das zweite Objekt (20) der magnetischen Anordnung (2) von der Unterseite (44) und/oder der Oberseite (42) des Mobilgeräts (40) durch einen Benutzer bewegbar ist.

**Claims**

1. A magnetic arrangement (2) for detecting a relative movement and/or relative position of a first and a second object relative to each other in six components, notably three displacements and three angular rotations in and respectively about the three axes of the Cartesian coordinate system, comprising
   at least six sensor units (4) for detecting the three displacements and the three angular rotations,
   wherein each sensor unit (4) comprises at least one magnet (16, 18) and one magnetoresistive sensor (6, 8),
   wherein the at least one magnet (16, 18) of the sensor unit (4) is movable relative to the magnetoresistive sensor (6, 8) of the sensor unit (4), and wherein each sensor unit (4) has a sensor direction (7, 9), wherein the magnetoresistive sensor (6, 8) measures a position of the at least one magnet (16, 18) along the sensor direction (7, 9),
   **characterized in that**
   the magnetoresistive sensors (6, 8) are one-dimensional sensors, and
   a first and a second group is provided, each comprising at least three sensor units (4), wherein the sensor directions (7, 9) of the sensor units (4) of the first group are essentially perpendicularly to the sensor directions (7, 9) of the sensor units (4) of the second group and interact with respective correspondingly oriented, opposite magnets.

2. The magnetic arrangement (2) according to claim 1, **characterized in that** the sensor units (4) of the first and/or the second group are arranged on a circle circumference, in particular at the same angular distance of preferably 120°, wherein particularly the two planes where the two circle circumferences lie are parallel, and in particular truly parallel.

3. The magnetic arrangement (2) according to any one of claims 1 or 2, **characterized in that** the magnets (16, 18) are arranged on the in particular movable second object (20), and the magnetoresistive sensors (6, 8) are arranged on the in particular immovable first object (22).

4. The magnetic arrangement (2) according to any one of claims 1 to 3, **characterized in that** the magnetoresistive sensors (6, 8) are arranged on an in particular common circuit board which is connected to an evaluation device and/or a control device and/or an electrical power source.

5. The magnetic arrangement (2) according to any one of claims 1 to 4, **characterized in that** the magnets (16, 18) are rigidly connected to each other and are arranged, preferably impressed, as a common arrangement on the in particular movable second object (20).

6. The magnetic arrangement (2) according to any one of claims 1 to 5, **characterized by** a mechanical stop, in particular a damping and/or stopping device (14), wherein the mechanical stop prevents the respective magnet (16, 18) from leaving the respective measuring range of its associated magnetoresistive sensor (6, 8).

7. The magnetic arrangement (2) according to any one of claims 1 to 6, **characterized in that** the first object (22) and the second object (20) are preferably flexibly connected to each other, particularly preferred via at least one spring element (12), and are movable relative to each other.

8. The magnetic arrangement (2) according to any one of claims 1 to 7, **characterized in that** the first object (22) and/or the second object (20) are essentially cylindrical, in particular circular cylindrical.

9. The magnetic arrangement (2) according to any one of claims 1 to 8, **characterized in that** the magnets (16, 18) are in particular exclusively arranged on an outside of the second object (20), and the magnetoresistive sensors (6, 8) are in particular exclusively arranged on an inside of the first object (22).

10. The magnetic arrangement (2) according to any one of claims 1 to 9, **characterized in that** the second object (20) comprises two sides essentially opposite each other, in particular essentially longitudinally opposite each other, wherein the magnetic arrangement (2) is configured such that a user can move the one side and/or the other side.

11. An input device, **characterized by** a magnetic arrangement (2) according to any one of claims 1 to 10, wherein the in particular movable second object (20) has a cylindrical or spherical shape for serving as a resting surface for the hand or at least a finger of a user.

12. A mobile input device comprising a mobile device (40), in particular a mobile phone or tablet computer or laptop or navigation device and at least one magnetic arrangement (2) according to any one of claims 1 to 10, wherein the mobile device (40) is connected to the first object of the magnetic arrangement (2) to rotate therewith.

13. The mobile input device according to claim 12, **characterized in that** the processor of the mobile device (40) corresponds to an evaluation device and/or a control unit of the magnetic arrangement (2).

14. The mobile input device according to claim 12 or 13, **characterized in that** the power source of the mobile device (40), in particular the rechargeable battery of the mobile device (40), corresponds to a power source of the magnetic arrangement (2).

15. The mobile input device according to any one of claims 12 to 14, **characterized in that** the magnetic arrangement (2) is in particular completely arranged inside the mobile device (40), and/or that the second object (20) of the magnetic arrangement (2) is adapted to be moved by a user from the lower side (44) and/or the upper side (42) of the mobile device (40).

**Revendications**

1. Dispositif magnétique (2) permettant de détecter le mouvement relatif et/ou la position relative d'un premier et d'un second objets l'un par rapport à l'autre selon six composantes, à savoir trois déplacements et trois rotations angulaires dans ou autour des trois axes du système de coordonnées cartésiennes, comportant
au moins six unités de détection (4) pour détecter les trois déplacements et les trois rotations angulaires,
chaque unité de détection (4) comprenant au moins un aimant (16, 18) et un capteur magnéto-résistif (6, 8),
ledit aimant (16, 18), au moins au nombre de un, de l'unité de détection (4) étant mobile par rapport au capteur magnéto-résistif (6, 8) de l'unité de détection (4),
et chaque unité de détection (4) ayant une direction de détection (7, 9), le capteur magnéto-résistif (6, 8) mesurant une position dudit aimant (16, 18), au moins au nombre de un, le long de la direction de détection (7, 9),
**caractérisé en ce que** les capteurs magnéto-résistifs (6, 8) sont des capteurs unidimensionnels et **en ce qu'**un premier et un second groupes d'au moins trois unités de détection (4) respectives sont prévus, les directions de détection (7, 9) des unités de détection (4) du premier groupe étant essentiellement perpendiculaires aux directions de détection (7, 9) des unités de détection (4) du second groupe et interagissant avec des aimants opposés orientés respectivement en conséquence.

2. Dispositif magnétique (2) selon la revendication 1, **caractérisé en ce que** les unités de détection (4) du premier et/ou du second groupe(s) sont disposées chacune sur une circonférence, avec la même distance angulaire, de préférence de 120°, les deux plans sur lesquels se trouvent les deux circonférences étant en particulier parallèles et en particulier véritablement parallèles.

3. Dispositif magnétique (2) selon l'une des revendications 1 ou 2, **caractérisé en ce que** les aimants (16, 18) sont disposés sur le second objet (20), en particulier mobile, et **en ce que** les capteurs magnéto-résistifs (6, 8) sont disposés sur le premier objet (22), en particulier immobile.

4. Dispositif magnétique (2) selon l'une des revendications 1 à 3, **caractérisé en ce que** les capteurs magnéto-résistifs (6, 8) sont disposés sur une carte de circuit imprimé, en particulier commune, qui est reliée à un dispositif d'analyse et/ou à une unité de commande et/ou à une source d'énergie électrique.

5. Dispositif magnétique (2) selon l'une des revendications 1 à 4, **caractérisé en ce que** les aimants (16, 18) sont reliés rigidement les uns aux autres et sont de préférence gravés, en particulier en tant que dispositif commun, sur le second objet (20), en particulier mobile.

6. Dispositif magnétique (2) selon l'une des revendications 1 à 5, **caractérisé par** une délimitation mécanique, en particulier un dispositif amortisseur et/ou un dispositif d'arrêt (14), la délimitation mécanique empêchant que l'aimant (16, 18) respectif quitte la zone de mesure respective du capteur magnéto-résistif (6, 8) qui lui est affecté.

7. Dispositif magnétique (2) selon l'une des revendications 1 à 6, **caractérisé en ce que** le premier objet (22) et le second objet (20) sont reliés l'un à l'autre, de préférence élastiquement, de manière particulièrement préférée via au moins un élément élastique (12), et sont mobiles l'un par rapport à l'autre.

8. Dispositif magnétique (2) selon l'une des revendications 1 à 7, **caractérisé en ce que** le premier objet (22) et/ou le second objet (20) est/sont essentiellement cylindrique(s), en particulier cylindrique(s) circulaire(s).

9. Dispositif magnétique (2) selon l'une des revendications 1 à 8, **caractérisé en ce que** les aimants (16, 18) sont disposés, en particulier exclusivement, sur une face extérieure du second objet (20) et les capteurs magnéto-résistifs (6, 8), en particulier exclusivement, sur une face intérieure du premier objet (22).

10. Dispositif magnétique (2) selon l'une des revendications 1 à 9, **caractérisé en ce que** le second objet (20) présente deux côtés sensiblement opposés, en particulier sensiblement longitudinalement opposés, le dispositif magnétique (2) étant conçu de manière telle qu'un utilisateur peut déplacer un côté et/ou l'autre côté.

11. Dispositif d'entrée, **caractérisé par** un dispositif magnétique (2) selon l'une des revendications 1 à 10, le second objet (20), en particulier mobile, ayant une forme cylindrique ou sphérique pour servir de surface d'appui pour la main ou au moins un doigt d'un utilisateur.

12. Dispositif d'entrée mobile comportant un dispositif mobile (40), en particulier un téléphone mobile ou une tablette ou un ordinateur portable ou un appareil de navigation, et au moins un dispositif magnétique (2) selon l'une des revendications 1 à 10, le dispositif mobile (40) étant relié au premier objet du dispositif magnétique (2) de façon solidaire en rotation.

13. Dispositif d'entrée mobile selon la revendication 12, **caractérisé en ce que** le processeur du dispositif mobile (40) correspond à un dispositif d'évaluation et/ou à une unité de commande du dispositif magnétique (2).

14. Dispositif d'entrée mobile selon la revendication 12 ou 13, **caractérisé en ce que** la source d'énergie du dispositif mobile (40), en particulier la batterie du dispositif mobile (40), correspond à une source d'énergie du dispositif magnétique (2).

15. Dispositif d'entrée mobile selon l'une des revendications 12 à 14, **caractérisé en ce que** le dispositif magnétique (2) est disposé, en particulier complètement, à l'intérieur du dispositif mobile (40) et/ou **en ce que** le second objet (20) du dispositif magnétique (2) peut être déplacé par un utilisateur, à partir de la face inférieure (44) et/ou de la face supérieure (42) du dispositif mobile (40).

Fig. 1

Fig. 2

Fig. 3

Fig. 4

Fig. 5

Fig. 6a          Fig. 6b          Fig. 6c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3611337 A1

- US 20140340372 A